# EUROPEAN PATENT APPLICATION

(11) **EP 3 321 344 A1**
(43) Date of publication of application: **16.05.2018**
(21) Application number: 15897823.9
(22) Date of filing: 07.07.2015
(51) Int. Cl.: C10B 47/44, C10B 7/10, C10G 1/00

(54) **PLANT FOR PROCESSING ORGANIC RAW MATERIAL USING PYROLYSIS METHOD**

(71) Applicant: Ladygin, Konstantin Vladimirovich, St.Petersburg 197342 (RU); Stompel, Semyon, Chapel Hill, North Carolina 27516 (US); Yankovoy, Dmitriy Sergeevich, Odessa 65005 (UA)
(72) Inventor: Ladygin, Konstantin Vladimirovich, St.Petersburg 197342 (RU); Stompel, Semyon, Chapel Hill, North Carolina 27516 (US); Yankovoy, Dmitriy Sergeevich, Odessa 65005 (UA)
(74) Representative: Toome, Jürgen
(86) International application number: PCT/RU2015/000422
(87) International publication number: WO 2017/007361

(57) **Abstract**

A plant for pyrolytic processing material containing organic substances comprises a reactor (1), a feeding bin (2) for a solid material, a feeding auger mechanism (3), a feeding tank (4) for a liquid material, a feeding pump (5), a smoke sucker (7), a chimney (8), an intermediate auger mechanism (20), a collecting bin (21) for an ash residue, a discharging auger mechanism (22), a filter (9) for a gas/vapour mixture, a heat exchanger (10), a cooling device (11), a circulation pump (12) for a coolant, a knockout drum (13), a gas drier tower (14), a hydraulic trap (15), an accumulating tank (16), a residual water separator (17), a water tank (18), a fuel tank (19), a nitrogen source (23), as well as an air blower for feeding air into the combustion chamber, necessary tubes and pipes, fittings, valves, expansion and balance tanks, and an automated control system. When needed, the plant may further comprise a fume cleaner (6), a catalyst reactor (25), and a power generating unit (24) for stand-alone supplying the plant with electric power. The reactor (1) is an assembly configured for thermal destruction of an organic material and it comprises a substantially cylinder-shaped pyrolysis chamber (107) in which lower part a main auger mechanism (101) is located. The main auger mechanism (101) provides feeding the material into the pyrolysis chamber (107), moving the material along the pyrolysis chamber (107), and unloading an ash residue from the pyrolysis chamber (107). The technical results attained by the invention are as follows: the plant is able to process free-combined solid and liquid materials, while the moisture content in the material is non-normalized; safety of the plant operation is improved; non-stop operation time of the plant is increased; and predetermined chemical and fractional contents of the liquid pyrolysis fuel and the ash residue are assured.

## Description

### FIELD OF THE INVENTION

The invention relates to pyrolytic processing materials containing organic substances including heavy hydrocarbons and polymers, in order to obtain liquid and/or gaseous fuel and dry mineral solids. The invention may be used in chemical industry, oil-and-gas-processing industry, construction industry, woodworking industry, light industry, food industry, in transportation, municipal services, etc.

### BACKGROUND OF THE INVENTION

A plant for pyrolytic processing organic material including cellulose, in order to obtain gaseous fuel, is known from patent document WO9925790A1. The plant comprises a horizontal pyrolysis chamber including a longitudinally disposed horizontal auger conveyor, wherein the processed material passes a few heating areas during its moving by the conveyor, while the temperature of each posterior area is higher than the temperature of the anterior area. The obtained gaseous fuel is further burnt in an engine driving a dynamo, while the exhaust products of the engine are used for heating the material in the pyrolysis chamber.

A plant for processing organic material by pyrolysis is known from patent document US5993751. The plant comprises two horizontal pyrolysis chambers, each chamber having several horizontally disposed longitudinal auger conveyors, wherein the temperature of the second pyrolysis chamber is higher than the temperature of the first pyrolysis chamber. The obtained gaseous fuel is burnt for heating the material in the pyrolysis chambers.

A plant for processing organic material by pyrolysis is known from patent document EP1577367A1. The plant comprises a horizontal pyrolysis chamber having a horizontally disposed longitudinal auger conveyor, wherein the processed material passes a few heating areas during its moving by the conveyor, while the temperature of each posterior area is higher than the temperature of the anterior area. The obtained gaseous fuel is burnt in order to neutralize the plant exhaust.

A plant for processing organic material by pyrolysis is known from patent document JP2005272529A. The plant comprises a horizontal pyrolysis chamber having a longitudinally disposed conveyor including an auger portion, wherein the conveyor is ramped up in the direction of the material movement, and the obtained gaseous fuel is burnt for heating the material in the pyrolysis chamber.

A plant for processing organic material by pyrolysis is known from patent document WO2008034263A1. The plant comprises a horizontal pyrolysis chamber having a longitudinally disposed horizontal auger conveyor, wherein a temperature gradient is provided in the chamber, while the temperature increases in the direction of the material movement. The obtained liquid fuel is removed from the plant, and the gaseous fuel is burnt for heating the material in a dehumidifier.

A plant for processing organic material by pyrolysis is known from patent document WO2012156769A1. The plant comprises two inclined pyrolysis chambers, each chamber having a longitudinally disposed conveyor including an auger portion, wherein the conveyor is ramped up in the direction of the material movement, while the temperature of the second pyrolysis chamber is higher than the temperature of the first pyrolysis chamber.

A plant for processing organic material by pyrolysis is known from patent document US2014130404A1. The plant comprises an inclined pyrolysis chamber having a twin longitudinally disposed auger conveyor, wherein the conveyor is ramped down in the direction of the material movement, and the obtained liquid fuel is removed from the plant.

A plant for processing organic material by pyrolysis is known from patent document RU2010151482. The plant comprises an inclined pyrolysis chamber having a longitudinally disposed auger conveyor, wherein the conveyor is ramped up in the direction of the material movement, and the discharge duct for the pyrolysis gases is heated by the exhaust products from the burner of the pyrolysis chamber, the obtained liquid fuel is removed from the plant, and the gaseous fuel is burnt for heating the material in the pyrolysis chamber.

A plant for processing organic material by pyrolysis is known from patent document RU2011138977. The plant comprises a tapered horizontal pyrolysis chamber having a longitudinally disposed horizontal tapered auger conveyor, wherein the discharge duct for the pyrolysis gases is disposed along the whole length of the lower part of the plant combustion chamber.

A plant for processing organic material by pyrolysis is known from patent document UAa200603076. The plant comprises a horizontal pyrolysis chamber having a longitudinally disposed horizontal auger conveyor, wherein the pyrolysis gases are discharged from the pyrolysis chamber at a point located near the area of loading the material into the pyrolysis chamber.

A plant for processing organic material by pyrolysis is known from patent document RU2014116917. The plant comprises an inclined pyrolysis chamber having a longitudinally disposed auger conveyor, wherein the conveyor is ramped up in the direction of the material movement.

The prior art is characterized by the following limitations addressed by the invention.

The solutions of prior art are not able to process randomly combined solid and liquid materials having non-normalized moisture content. Known pyrolysis plants are designed for pyrolytic processing organic materials of certain composition and structure or those of certain aggregative state and consistence.

Known pyrolysis plants are not safe enough during their operation due to substantial vacuum or substantial pressure in the reactors; both are highly risky in view of forming an explosive mixture in the reactors or in other parts of the plants or besides the plants.

Known pyrolysis plants do not provide enough throughput capacity due to discontinuous mode of operation thereof, as the plants have to be stopped for loading the material into the pyrolysis chamber. Known continuous pyrolysis plants are small so they do not provide enough throughput capacity either, whereas known large-scale continuous pyrolysis plants are potentially unsteady in their operation due to structural complexity thereof.

Known pyrolysis plants drain a lot of electrical energy from an external power source due to absence of their own electric generator, thus the area of using thereof is limited or their operation efficiency may be low if external power sources are missing.

The life cycle of known pyrolysis plants is insufficient or their service maintenance and minor repair period is too short due to sedimentation of viscous or carbonized deposits inside ducts and tubes and other parts of the pyrolysis plants; this limitation is caused by arrangement features of the plants.

Fractional content of the liquid fuel obtained by known pyrolysis plants is unstable due to the pyrolysis process being highly dependent on the material composition and other operation factors.

Ash residuals from known pyrolysis plants are toxic and their composition is unstable, so their usage or disposal is impossible or complicated.

Known large pyrolysis plants are non-portable and/or the labour content of installing and commissioning as well as dismantling and decommissioning thereof is high. This limitation is caused by fixed, immovable arrangement of known high-volume pyrolysis plants; this means that some special equipment and tools have to be used during installation and deinstallation of the plants, in particular, welding equipment and heavy carrying and lifting equipment have to be provided, high-load driveways have to be arranged, special construction permits have to be acquired, etc.

### SUMMARY OF THE INVENTION

A reactor for thermal destruction of organic substances comprises:
- an elongated pyrolysis chamber disposed substantially horizontally;
- an auger mechanism disposed in a lower portion of the pyrolysis chamber and inclined in relation to a longitudinal axis of the pyrolysis chamber, the auger mechanism comprising a group of at least two augers;
- a combustion chamber substantially encompassing the pyrolysis chamber;
- at least one flue for a gas/vapour mixture, the flue being in communication with an outlet for discharging the gas/vapour mixture from the pyrolysis chamber;
- at least one burner disposed in the combustion chamber;
- at least one blower for supplying air into the combustion chamber.

The pyrolysis chamber may be made of a corrosion-resistant steel and may be provided substantially cylinder-shaped. The lower portion of the pyrolysis chamber may comprise a chute, wherein a cross-section of the chute corresponds to a shape of the group of augers disposed in the chute.

A thermal gradient of internal environment of the pyrolysis chamber may be provided in the reactor, wherein temperature may increase in a direction of the material movement, e.g. from approximately 200°C to approximately 500°C, and a differential pressure from approximately minus 10 mbar to approximately 50 mbar may be provided in the pyrolysis chamber.

Connection joints of the pyrolysis chamber may be sealed with gaskets and the pyrolysis chamber may be supplied with nitrogen in order to prevent ingress of atmospheric oxygen thereto.

An angle between the auger mechanism and the longitudinal axis of the pyrolysis chamber may be in a range of 5° to 15°, wherein the auger mechanism is ramped up in the direction of the material movement.

The augers of the auger mechanism may be made of a corrosion-resistant steel and may be arranged in a horizontal row or in several horizontal rows, and may be arranged in parallel to each other and overlapped by 10% to 30% of an auger diameter, while adjacent augers may rotate in opposite directions.

The lower portion of the combustion chamber may be substantially rectangular-shaped, while the upper portion of the combustion chamber may be substantially cylinder-shaped. An outlet for discharging fumes from the combustion chamber may be disposed near a loading side of the reactor, where the material is fed, or it may be disposed near an unloading side of the reactor, where the ash residue is dumped.

The burners may be configured to burn liquid and/or gaseous fuel and may be disposed in the combustion chamber so as to provide a thermal gradient of internal environment of the pyrolysis chamber, where temperature increases in the direction of moving the material, e.g. from approximately 200°C to approximately 500°C.

An outlet for discharging the gas/vapour mixture may be disposed near an initial portion of the material moving track in the pyrolysis chamber. The gas/vapour mixture flue may be made of a corrosion-resistant steel and may be disposed within the combustion chamber outside and along the pyrolysis chamber on a route of exhaust products, e.g. in a point where temperature of the exhaust products is in a range of approximately 150°C to approximately 450°C.

A plant for pyrolytic processing material containing organic substances comprises:
- a reactor;
- loading means connected to a main auger mechanism of the reactor;
- unloading means connected to the main auger mechanism of the reactor;
- fume exhaust means connected to a combustion chamber of the reactor;
- a pressurized nitrogen source connected to a pyrolysis chamber of the reactor;
- a gas/vapour mixture filter connected to at least one gas/vapour mixture flue of the reactor;
- gas/vapour mixture cooling means connected to the gas/vapour mixture filter;
- a gas/liquid separator (a knockout drum) connected to the gas/vapour mixture cooling means;
- a gas drier tower connected to the gas/liquid separator;
- a hydraulic trap connected to the gas drier tower;
- a residual water separator connected to the gas drier tower;
- a fuel tank for the liquid pyrolysis fuel, connected to the residual water separator.

The fuel tank may be connected to the reactor and the hydraulic trap may be connected to the reactor so as to feed it with the pyrolysis fuel.

The hydraulic trap may be a scrubber capable of functioning as a hydraulic trap.

The plant may comprise an intermediate accumulating tank for the liquid pyrolysis fuel, connected between the gas/liquid separator, the gas drier tower, and the residual water separator.

The plant may comprise an additional catalytic reactor, connected between the reactor and the gas/vapour mixture filter.

The plant may comprise a stand-alone power generating unit connected to the fuel tank and/or to the hydraulic trap so as to supply the unit with the pyrolysis fuel.

The loading means may comprise a level gage having a predetermined cut-off setting so as to assure continuous feeding the reactor with the material, and a heater for reducing viscosity of the liquid material.

The unloading means may comprise a cooled auger e.g. a liquid-cooled auger or a gas-cooled auger. The unloading means may comprise a replaceable ferrule disposed between an auger and an inner case of a discharging auger mechanism.

The unloading means may be connected to the nitrogen source and nitrogen supplied from the nitrogen source to the unloading means may be heated.

The plant may be based on a modular configuration approach.

A method of pyrolytic processing a material containing organic substances comprises the steps of:
- loading the material into a reactor by loading means;
- providing movement of the material inside a pyrolysis chamber of the reactor by a main auger mechanism;
- providing a thermal gradient of internal environment of the pyrolysis chamber, while temperature increases in a direction of moving the material;
- providing circulation of pyrolysis products inside the pyrolysis chamber of the reactor;
- discharging a gas/vapour mixture from the pyrolysis chamber of the reactor;
- processing the gas/vapour mixture by a gas/vapour mixture filter, gas/vapour mixture cooling means, a gas/liquid separator, a gas drier tower, and a residual water separator so as to obtain a liquid and/or gaseous pyrolysis fuel;
- supplying a combustion chamber of the reactor with at least part of the obtained liquid and/or gaseous pyrolysis fuel;
- unloading an ash residue from the reactor by unloading means.

The gaseous pyrolysis fuel may be additionally processed by a scrubber.

The method may assure continuous feeding the reactor with the material, and the liquid material may be heated prior to loading into the reactor so as to reduce its viscosity.

The method may include providing movement of the material inside the pyrolysis chamber that assures transferring heavy hydrocarbons by convection and a pressure gradient from a portion of the pyrolysis chamber, where temperature is higher to a portion of the pyrolysis chamber, where temperature is lower; condensing them in a portion of the pyrolysis chamber, where temperature is lower; and then returning them to a portion of the pyrolysis chamber, where temperature is higher, using the main auger mechanism.

The method may include providing a thermal gradient of internal environment of the pyrolysis chamber in a direction of moving the material from approximately 200°C to approximately 500°C, and providing a differential pressure in the pyrolysis chamber in a range of approximately minus 10 mbar to approximately 50 mbar.

The method may include providing cooling an auger of a discharging auger mechanism.

The method may include providing supplying the unloading means with nitrogen and heating nitrogen supplied to the unloading means.

The method may include using at least part of the obtained liquid and/or gaseous pyrolysis fuel for producing electric power by a stand-alone power generating unit.

The reactor may be used for regeneration of non-organic filter materials, sorbent agents, and catalyst materials as well as for processing substantially non-organic materials.

### DESCRIPTION OF THE ATTACHED FIGURES

Fig. 1 shows a diagram of the plant for pyrolytic processing organic material.
Fig. 2 shows a partial longitudinal sectional view of the intermediate auger mechanism 20.
Fig. 3 shows a cross-sectional view of the intermediate auger mechanism 20.
Fig. 4 shows a general plan view of the plant for pyrolytic processing organic material.
Fig. 5 shows a general side view of the plant for pyrolytic processing organic material.
Fig. 6 shows a partial longitudinal sectional view of the reactor 1.
Fig. 7 shows a cross-sectional view of the reactor 1.

### DETAILED DESCRIPTION OF THE INVENTION

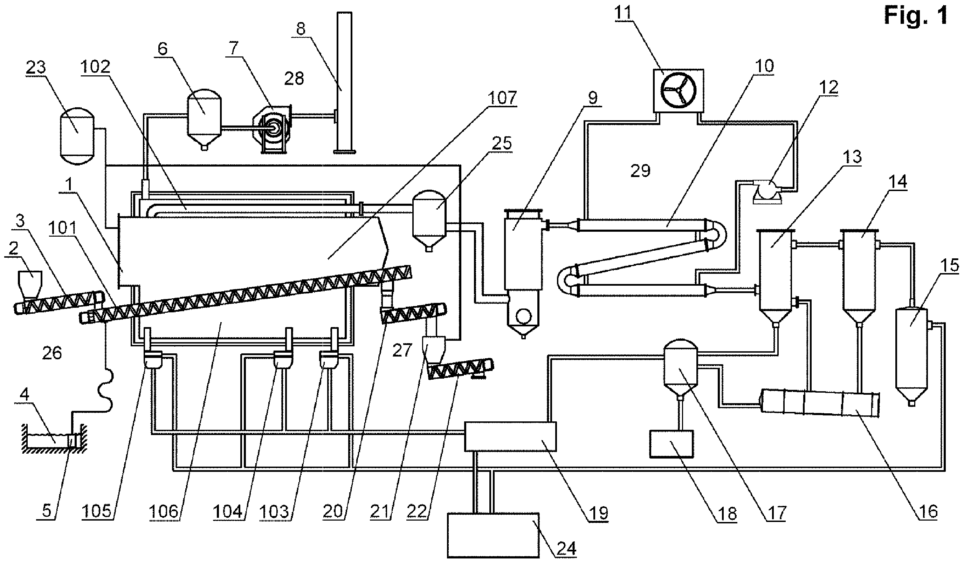

Fig. 1 shows a diagram of the plant for pyrolytic processing a row material containing organic substances (hereinafter referred to as the plant). The row material may be municipal waste; industrial waste like chemical, petrochemical, oil-processing or woodworking waste; slime, sludge or slurry like bore mud in oil and gas industry; acid tar, rubber waste like worn tires, plastic articles, lignin, silty sediments, used kieselguhr (diatomite), etc.; the row material may be in the solid, liquid or slurred state. In this description, the row material containing organic substances is commonly referred to as the material or the organic material.

Sometimes, the material may contain a very little amount of organic substances i.e. it may be substantially inorganic like water-and-salt-based drilling sludge. In this case the processing may substantially consist in transforming the material into a dry solid residue by means of evaporation of water.

The plant comprises a reactor 1, a feeding bin 2 for a solid material, a feeding auger mechanism 3, a feeding tank 4 for a liquid material, a feeding pump 5, a smoke sucker 7, a chimney 8, an intermediate auger mechanism 20, a collecting bin 21 for an ash residue, a discharging auger mechanism 22, a filter 9 for a gas/vapour mixture, a heat exchanger 10, a cooling device 11, a circulation pump 12 for a coolant, a knockout drum 13, a gas drier tower 14, a hydraulic trap 15, an accumulating tank 16, a residual water separator 17, a water tank 18, a fuel tank 19, a nitrogen source 23, and an air blower (not shown in fig 1) for feeding air into the combustion chamber, as well as necessary tubes and pipes, fittings, valves, expansion and balance tanks, and an automated control system. When needed, the plant may further comprise a fume cleaner 6, a catalyst reactor 25, and a power generating unit 24 for stand-alone supplying the plant with electric power.

The material is transported to the plant by motor, railway, water or any other transport means and loaded into the feeding bin 2 or the feeding tank 4, depending on the composition and consistence of the material. It is also possible to intake the liquid material directly from reservoirs of external facilities, e.g. oil sludge may be fed from sludge ponds or sludge pits, and silt may be fed from silt basins, when the plant is disposed near such facilities.

The feeding bin 2 may be equipped with a level gage having a predetermined cut-off setting, thus providing continuous feeding the material to the reactor 1 so as to avoid idle run of the main auger mechanism 101 and intake of atmospheric oxygen into the pyrolysis chamber 107. The feeding tank 4 may also be equipped with a level gage having a predetermined cut-off setting and may further be equipped with a heater for reducing viscosity of the liquid material. It shall be noted, that simultaneous feeding the plant with the solid and liquid material is possible with no limits of water content in the material.

The material from the feeding bin 2 is received in a jigger screen, where debris able to damage the plant equipment (like branches of trees, stones, metal scrap, etc.) are isolated from the material. Then the solid material is fed by the feeding auger mechanism 3 to the main auger mechanism 101 of the reactor 1, while the liquid material is fed by the feeding pump 5 from the feeding tank 4 to the same main auger mechanism 101 of the reactor 1.

The assemblies configured to provide feeding the material to the reactor 1 are collectively referred to as loading means 26. For instance, the loading means 26 for a solid material may comprise the feeding bin 2, the jigger screen and the feeding auger mechanism 3, whereas the loading means 26 for a liquid material may comprise the feeding tank 4 and the feeding pump 5. In an embodiment of the invention where simultaneous feed of solid and liquid material is provided, the loading means 26 may comprise both assemblies configured to provide feeding a solid material and assemblies configured to provide feeding a liquid material.

The material is heated and anaerobic thermal destruction of its organic content occurs in the pyrolysis chamber 107 of the reactor 1. The material is heated with burners 103, 104, 105 located within the combustion chamber 106 of the reactor 1. The material is heated gradually as it is moved by the main auger mechanism 101 along the reactor 1. Smooth thermal profile of the internal volume of the pyrolysis chamber 107 is maintained by control of the amount of the fuel and air fed to the burners, by adjustments of the burners, and by control of the negative pressure in the combustion chamber 106.

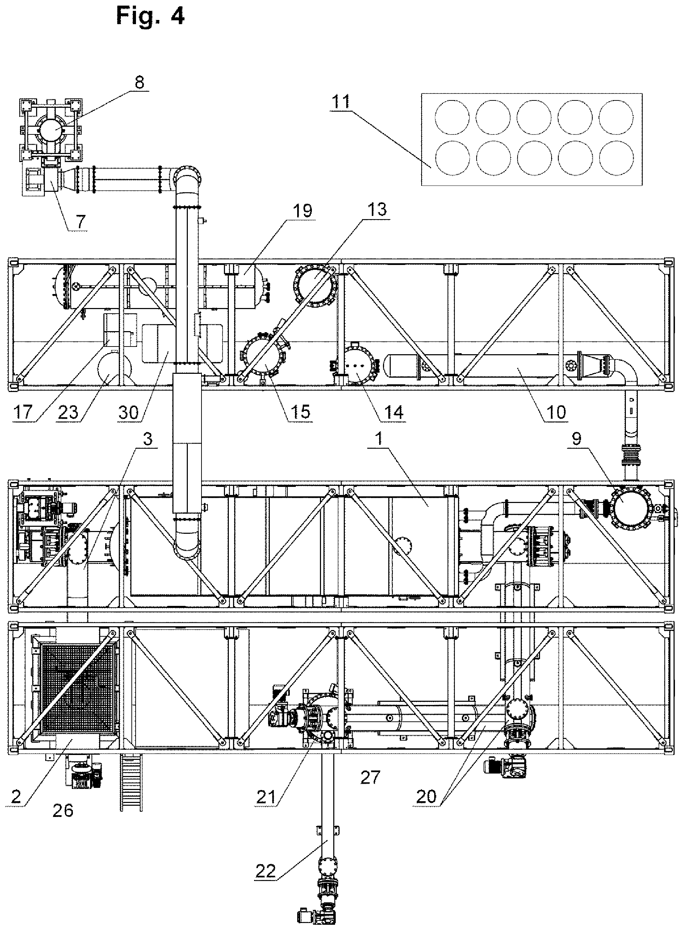

While the reactor 1 is initially warmed up, the liquid pyrolysis fuel is used. The fuel produced during the plant operation is meant under the pyrolysis fuel. When the liquid pyrolysis fuel is not available, then a diesel fuel or any other proper liquid fuel supplied from an additional tank (not shown in the drawings) may be used instead. The liquid pyrolysis fuel is fed by gravity from the fuel tank 19 to the burners 103, 104, 105. When a gaseous pyrolysis fuel is available from an outer source, the reactor 1 may be launched and initially warmed up using natural or associated or condensed gas. In steady operation, the plant partially or entirely runs on the pyrolysis gas produced during the plant operation. All or some of the burners 103, 104, 105 may be configured as combined gas-liquid burners able to use a liquid fuel, a gas fuel, or a mixture of a liquid fuel and a gas fuel. When the burners 103, 104, 105 run on a diesel fuel or the liquid pyrolysis fuel, a compressor 30 (shown in Fig. 4) is used for feeding the burners with air for spraying the liquid fuel.

The compressor 30 also supplies the nitrogen source 23 with air, and the nitrogen source 23 is equipped with an air dryer (not shown in the drawings) located upstream. The nitrogen source 23 comprises a receiver (not shown in the drawings) and provides pressure of approximately 6 bars necessary for automatic feeding the reactor with nitrogen so as to avoid air leak-in upon the plant start-up or shut-down. Nitrogen is fed into the pyrolysis chamber 107, so forming an explosive air-fuel mixture in the pyrolysis chamber 107 is prevented. The nitrogen source 23 comprises a standby nitrogen source in a form of a nitrogen manifold (not shown in the drawings). The pressure of approximately 3 bars to approximately 7 bars is applied to the reactor 1 via pressure controllers installed on each of the manifold cylinders. In emergency conditions, nitrogen is fed from the manifold to the reactor 1 via a cutoff valve configured to open when negative pressure in the pyrolysis chamber 107 is approximately 10 mbar and to close when positive pressure in the pyrolysis chamber 107 is approximately 3 mbar.

The smoke sucker 7 assures exhausting fume from the combustion chamber 106 and maintaining an operational underpressure (10 to 30 Pa) therein. The fume is cooled down to approximately 170°C owing to dilution with atmospheric air and further it is cleaned in the fume cleaner 6 when needed; afterwards the fume is discharged to the atmosphere via the chimney 8. When necessary, the fume thermal energy may be used for domestic or industrial needs, e.g. for heating water or any other heat carrier.

Components assuring exhausting fume from the plant are collectively referred to as fume exhausting means 28. For example, the fume exhausting means 28 may comprise the smoke sucker 7, the fume cleaner 6, and the chimney 8.

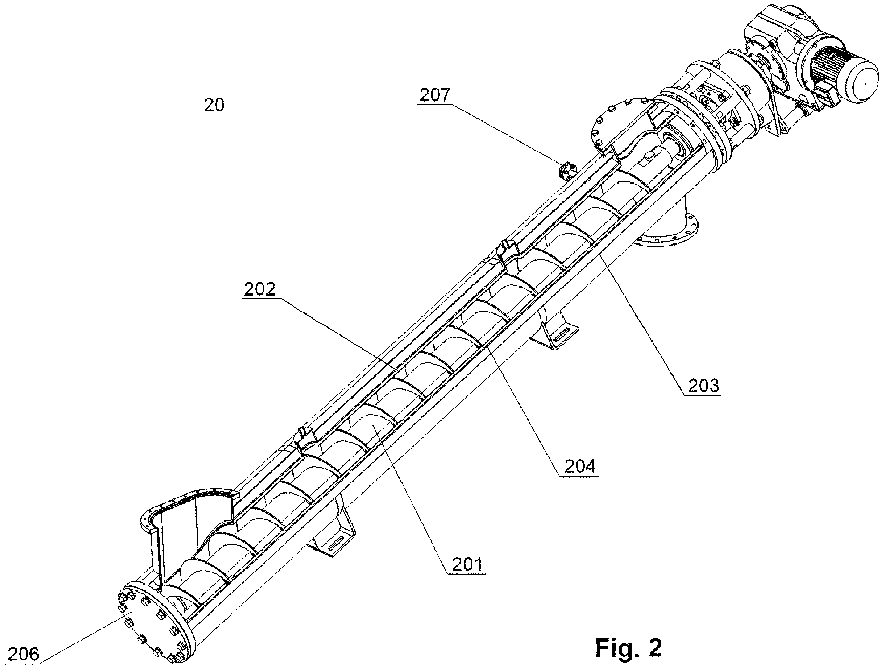

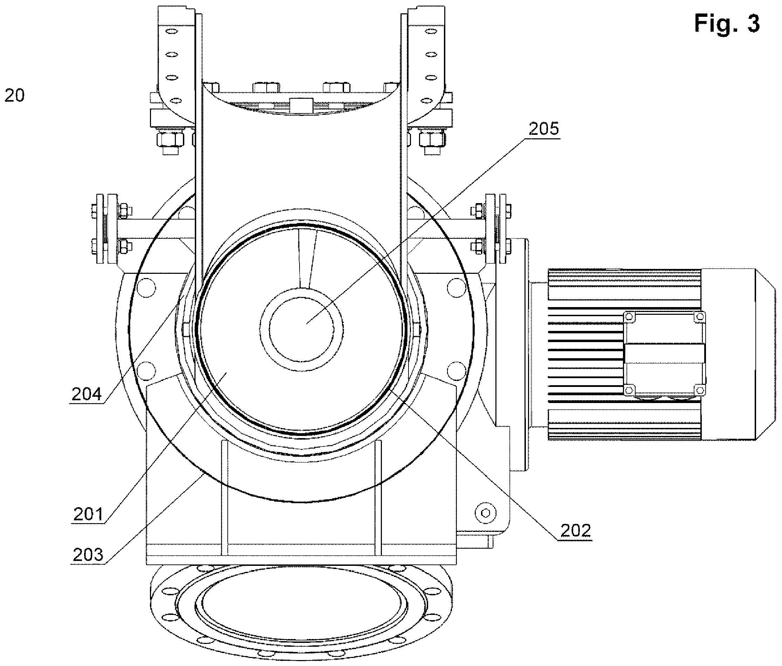

The ash residue formed during the thermal destruction process is fed from the main auger mechanism 101 to the intermediate auger mechanism 20 and further to the collecting bin 21. The intermediate auger mechanism 20 configuration is shown in Fig. 2 and Fig. 3.

A liquid-cooled or gas-cooled auger 201 may be used in the intermediate auger mechanism 20, wherein a liquid coolant (e.g. water) or a gaseous coolant (e.g. nitrogen) is supplied into the passage 205 of the auger 201. The ash residue transferred by the intermediate auger mechanism 20 is highly abrasive, thus causing severe wear of the elements directly contacting the ash residue. The auger 201 is made of a corrosion-resistant steel having enough thickness in order to assure a long-life performance of the auger 201. If the same thick material was used for the inner case of the intermediate auger mechanism 20, it would be excessively stuff-demanding and heavy. Therefore, the intermediate auger mechanism 20 comprises an inner replaceable ferrule 202 made of a corrosion-resistant steel having comparatively small thickness. The replaceable ferrule 202 is placed between the auger 201 and the inner case 204. The intermediate auger mechanism 20 is designed so as to assure fast replace of the replaceable ferrule 202 by demounting the end cap 206 and removing the worn replaceable ferrule 202 out of the inner case 204 and further mounting a new replaceable ferrule 202. The intermediate auger mechanism 20 contains an outer shell 203 which is used as a safety cage.

In order to prevent forming an explosive air-fuel mixture in the ash residue collecting bin 21, nitrogen is supplied into the ash residue collecting bin 21 from the nitrogen source 23. Nitrogen may be supplied into the ash residue collecting bin 21 directly or via a brunch 207 of the intermediate auger mechanism 20. Moreover, nitrogen supplied into the ash residue collecting bin 21 may be heated up to a temperature near the temperature of the ash residue by the gas/vapour mixture or the fume in a heat exchanger (not shown in the drawings). In one embodiment, nitrogen supplied into the ash residue collecting bin 21 may travel via a passage 205 of the auger 201, thus getting hot and cooling down the auger 201. In another embodiment, nitrogen supplied into the ash residue collecting bin 21 may travel via a gap between the outer shell 203 and the inner case 204, thus getting hot and cooling the inner case 204 down. Heating nitrogen supplied into the ash residue collecting bin 21 facilitates in avoiding sharp cooling down the ash residue and so prevents forming underpressure in the ash residue collecting bin 21, as such underpressure may cause intaking atmospheric air and binding moisture therefrom. Ingress of moisture into the ash residue collecting bin 21 may cause undesired effects like loss of cementing properties of the ash residue, agglomeration of (clumping) the ash residue, increase in abrasiveness of the ash residue, and its bailing on the elements of the ash residue collecting bin 21 and the discharging auger mechanism 22. Therefore, supplying preheated nitrogen into the ash residue collecting bin 21 facilitates maintaining predetermined properties of the ash residue.

The ash residue is unloaded by the discharging auger mechanism 22 into bags, containers or other packages; otherwise, the ash residue may be unloaded into a cargo vehicle body directly. When necessary, protective atmosphere may be created in the bags, containers or other packages by supplying nitrogen from the nitrogen source 23. If the ash residue is viscous and sticky (like a black sand), the ash residue collecting bin 21 may additionally be equipped with a heater (not shown in the drawings). The heater may be e.g. a heater utilizing thermal energy of the gas/vapour mixture or the fume, or an electric heater.

Components assuring unloading the ash residue from the reactor 1 are collectively referred to as the unloading means 27. For example, the unloading means 27 may comprise the intermediate auger mechanism 20, the ash residue collecting bin 21, and the discharging auger mechanism 22.

When the plant is started, temperature in the pyrolysis chamber 107 is increased gradually by 2 to 3 centigrade degrees per minute. The gas/vapour mixture from the reactor 1 is fed into a heat exchanging device 10 via a filter 9. The start of the pyrolysis process is judged by the pressure increase in the pyrolysis chamber 107 and by the gas/vapour mixture temperature increase up to approximately 40°C upstream the heat exchanging device 10.

When necessary, a catalytic reactor 25 may be mounted at the output of the reactor 1 in order to increase the cracking level, to form light hydrocarbons and provide catalytic isomerization thereof. Type and properties of the catalytic reactor 25 depend on chemical composition of the processed material. In one embodiment of the invention, the catalytic reactor 25 may contain microspheric catalyst containing zeolite with addition of rear-earth components. The catalyst particle size is not greater than 130 µm, and the catalyst specific surface area is 320 to 370 m²/g, while the zeolite content is not greater than 25%. Degree of filling the catalytic reactor 25 with catalyst is approximately 90%. The catalytic reactor 25 may be equipped with a lens compensator in order to prevent thermal deformation thereof.

The gas/vapour mixture is fed from the catalytic reactor 25 into the gas/vapour mixture filter 9 in order to make it free from carbon black and residual heavy hydrocarbons. The gas/vapour mixture filter 9 is filled by a filtering material by approximately 80%. The filtering material may be a highly porous granular catalyst. The gas/vapour mixture travels through the filtering layer, while the heavy hydrocarbons deposited therein are occasionally drained into a receiver tank (not shown in the drawings) via a valve located in the lowest part of the filter. When the plant processes certain types of material, intake of these heavy hydrocarbons into the fuel tank is not desirable as this may cause acidification of the fuel. In this case, the drained liquid is recycled into to the reactor 1 for reprocessing. The gas/vapour mixture filter 9 condition is judged by the pressure drop upon the filter.

Further, the gas/vapour mixture is cooled down in the heat exchanging device 10 by a circulating liquid coolant. The heat exchanging device 10 may be a shell-and-tube heat exchanger. A circulation pump 12 forces the liquid coolant circulate through a cooling device 11 which may be an air cooler or a chiller, depending on the environmental conditions.

Components assuring cooling down the gas/vapour mixture are collectively referred to as gas/vapour mixture cooling means 29. For example, the gas/vapour mixture cooling means 29 may comprise the heat exchanging device 10, the cooling device 11 and the circulation pump 12.

Cooled pyrolysis products are fed from the heat exchanging device 10 to the knockout drum 13, where the liquid phase of the pyrolysis products is separated from the gaseous phase. A drain valve is placed in the lowest area of the knockout drum 13, which valve is used for occasional drainage of the separated water into a portable vessel. Large volume of the separated water may be fed into the residual water separator 17. The liquid phase of the pyrolysis products (i.e. the liquid pyrolysis fuel) is drained by gravity into the accumulating tank 16, while the gaseous phase of the pyrolysis products (i.e. the pyrolysis gas) is fed into the gas drier tower 14. The liquid pyrolysis fuel separated by the gas drier tower 14 is drained by gravity into the same accumulating tank 16, and the pyrolysis gas is fed into the hydraulic trap 15 and further is supplied to the corresponding burners. A scrubber configured to additionally clean the pyrolysis gas may be used instead of the hydraulic trap 15. Excess pyrolysis gas may be runoff via a safety valve (not shown in the drawings) for municipal or industrial use, or alternatively it may be burnt by an excess gas torch. When the process runs within normal conditions, the pyrolysis gas differential pressure does not exceed 50 mbar, so the safety valve is shut-off.

The liquid pyrolysis fuel is fed from the accumulating tank 16 via the residual water separator 17 into the fuel tank 19 or supplied to a warehouse (not shown in the drawings). Water is drained from the residual water separator 17 to a water tank 18 via a drainage valve (not shown in the drawings) which is controlled by a phase separation sensor of the residual water separator 17.

The liquid pyrolysis fuel from the fuel tank 19 or the pyrolysis gas from the hydraulic trap 15 may be fed into the power generating unit 24 for stand-alone supplying the plant with electric power. The stand-alone power generating unit 24 is a turbine-based electric generator, where the turbine may operate using a gaseous, liquid or combined fuel. Alternatively, the stand-alone power generating unit 24 may be based on an engine of any other type having appropriate performance, e.g. an internal combustion engine. The use of the stand-alone power generating unit 24 provides reducing power consumption from an external power line, or even totally switching the plant to the self-generated power supply. This feature provides cost-effective operation of the plant in distant regions where external power lines are not available.

The plant is equipped with inspection equipment, control devices and automation facilities (not shown in the drawings). All these means allow determination, inspection and control of the process parameters, while the process may be managed automatically, including remote control mode, or it may be managed manually by the personnel.

The plant is designed based on a modular approach. Modular configuration of the plant facilitates its installation in hard-to-reach areas e.g. near oil or gas producing wells, sludge ponds or oil spillage spots. Modular configuration of the plant also provides possibility of its fast relocation owing to low labour content of mounting and dismounting work and to simplicity of construction work with no need of special kinds of machinery, in particular welding equipment and heavy carrying and lifting equipment. Moreover, arrangement of special access roads and acquisition of particular licenses or permits for construction, etc. are not necessary, so plant setup time may be substantially reduced.

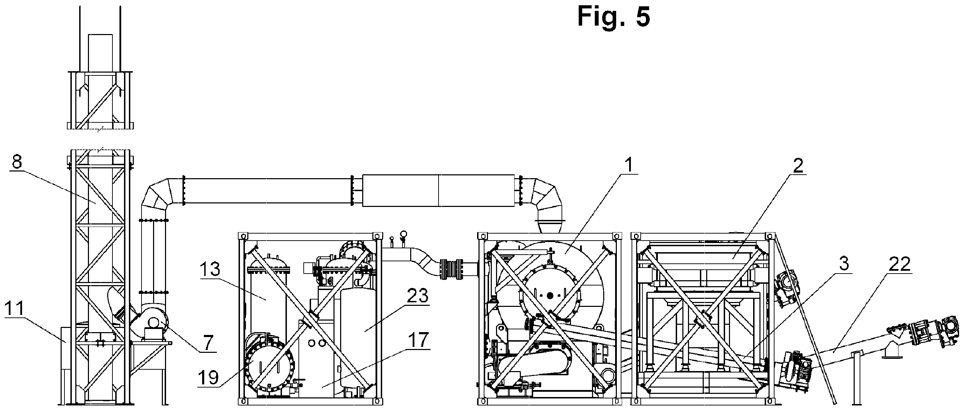

The plant in its transportation position is arranged in three units each having dimensions of a standard 40-foot container and weight not greater than 21 ton. This arrangement allows transportation of the plant by any kind of transport means including road transport and air transport. Upon delivery, the plant shall be installed on a solid flat base. The base may be a concrete bed or a pile and beam footing, etc.; in any way, the static load capacity of the base shall not be less than 10 kg/cm². The plant in its operation position is shown in Fig. 4 and Fig. 5.

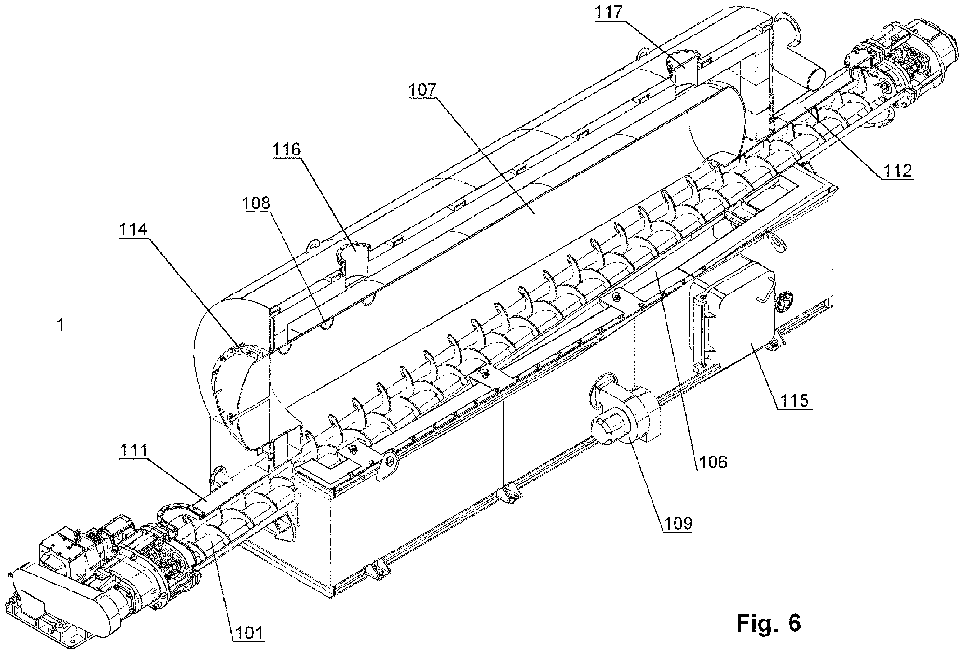

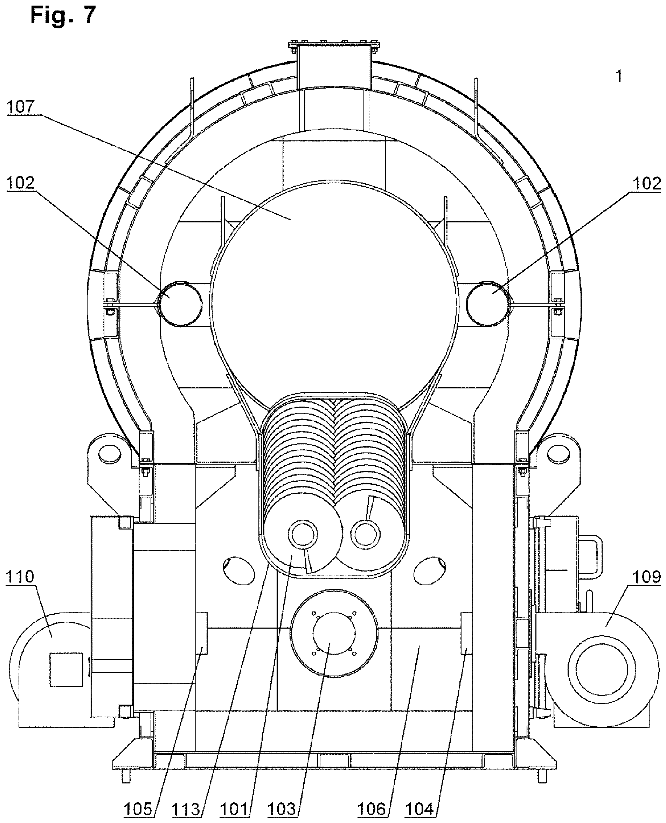

Fig. 6 and Fig. 7 show the reactor 1 arrangement.

The reactor 1 is configured for thermal destruction of the organic material and it comprises the substantially cylinder-shaped pyrolysis chamber 107 in which lower part the main auger mechanism 101 is located. The main auger mechanism 101 provides feeding the material into the pyrolysis chamber 107, moving the material along the pyrolysis chamber 107, and unloading the ash residue from the pyrolysis chamber 107.

Configuration and operation mode of the main auger mechanism 101 assure air-tight filling the head portion 111 of the main auger mechanism 101 with wet or liquid material. Connections of the pyrolysis chamber 107 are sealed also, so intake of atmospheric oxygen into the pyrolysis chamber 107 is not allowed. These features provide steady and controlled course of thermal destruction process and assure explosion and fire safety of the plant. As the volume of the ash residue is less than the processed material, the ash residue does not fill completely the tail portion 112 of the main auger mechanism 101; moreover, the ash residue is quite gas-permeable, so nitrogen is fed into the reactor 1 in order to impede intake of atmospheric oxygen into the pyrolysis chamber 107 from the tail portion 112 of the main auger mechanism 101. Feeding the reactor 1 with nitrogen is particularly important when the plant processes loose or powder-like material which does not provide enough air-tight fill of the head portion 111 of the main auger mechanism 101.

When the process is steady, differential pressure in the pyrolysis chamber 107 is maintained in the range of approximately minus 10 mbar to approximately 50 mbar. The operation pressure near the atmospheric pressure level allows reducing the risk of forming an explosive mixture in the reactor 1 and in other portions of the plant, as well as in the immediate vicinity thereof in emergency conditions, e.g. when automation control fails or sealing is damaged. Optimal pressure within the above-indicated range is determined depending on the material composition, based on statistical data collected by the automation control system during operation of the plant or defined by trial run. The criterion of the optimal pressure in the pyrolysis chamber 107 is organic content in the ash residue, which usually shall not exceed 0.1 mg/kg. When necessary, organic content in the ash residue may be intentionally increased in order to maintain desired viscosity of the residue, e.g. when the residue is intended for use in construction of road carpet bottom layers.

When underpressure in the pyrolysis chamber 107 is required for assuring optimal operational mode of the plant, the underpressure is provided by cooling the gas/vapour mixture performed in the heat exchanging device 10. When necessary, an additional pump (not shown in the drawings) controlled by an automation control system may be additionally used for providing the underpressure. Overpressure in the pyrolysis chamber 107 is limited by a valve controlled by an automation control system.

The pyrolysis chamber 107 is made of a corrosion-resistant steel and is positioned horizontally, while a chute 113 is located in the lower portion of the pyrolysis chamber 107. The chute 113 is ramped up in the direction of the material movement by an inclination angle of 2° to 15° relative to the horizontal axis of the pyrolysis chamber 107. Optimal angle value depends on the material kind, for instance, a small angle (e.g. 2° to 7°) is preferable for dry material, and a large angle (e.g. 12° to 15°) is preferable for liquid material. The angle also affects the plant capacity, namely the larger the angle, the higher the plant throughput is. This is provided owing to that the speed of motion of the material may be increased, with no decrease of the time of residence of the material in the pyrolysis chamber 107 as the moving path of the material is longer. The mean value of the angle may be a trade-off solution for a plant using different kinds of the material. This allows the plant to process free-combined solid and liquid material, while the moisture content in the material is non-normalized. In particular, the inclination angle of 10° provided acceptable operation parameters of the plant prototype when processing various materials having variable consistence and variable moisture content, while the materials range from drilling sludge and used crankcase oil to polyethylene film waste and tyre rubber.

The main auger mechanism 101 is located in the chute 113. The chute 113 cross-section shape corresponds to the shape of the auger group of the main auger mechanism 101. A door 114 is provided in the pyrolysis chamber 107 butt-end at the material loading side in order to allow maintenance work and minor repairs.

The length of the open portion of the main auger mechanism 101 inside the pyrolysis chamber 107, the speed of motion of the material and the inclination angle of the main auger mechanism 101 together determine the plant capacity and affect the gas/vapour mixture composition at the output of the reactor 1 and the pyrolysis fuel composition, correspondingly.

The main auger mechanism 101 contains a number of augers made of a corrosion-resistant steel, which are positioned in parallel and transversally overlapped by 10% to 30% of the auger diameter, wherein adjacent augers rotate in opposite directions. In order to facilitate extraction of the gas/vapour mixture from the material bulk, the augers are preferably aligned in one horizontal row. When there are more than two augers, they may be aligned in several horizontal rows. Using a number of augers disposed as indicated in the above provides effective moving a fluid material in the head portion 111 of the main auger mechanism 101, loosening and mixing the material bulk during its movement along the pyrolysis chamber 107, as well as acceptable moving the ash residue in the tail portion 112. Moreover, the transversal overlap and opposite rotation of the augers provide auger self-cleaning during operation thereof, which is particularly important for the head portion 111 of the main auger mechanism 101, where viscosity of the material is maximal.

In one embodiment of the invention, the main auger mechanism 101 comprises two augers, its open portion inside the pyrolysis chamber 107 is approximately 5 m long, inclination angle thereof is approximately 10°, and actual speed of the material movement inside the pyrolysis chamber 107 is maintained to be approximately 3 mm/s, which provides the plant capacity of approximately 800 kg of the processed material per hour.

When a larger number of augers are used in the main auger mechanism 101, this allows improving the plant capacity with no substantial increase in the plant dimensions and weight, as well as in stuff consumption and labour content of the plant manufacturing. For instance, when three augers disposed in one horizontal row are used in the main auger mechanism 101, the plant capacity is approximately 1100 kg per hour with about the same plant dimensions.

The plant capacity may also be improved by rising the length of the pyrolysis chamber 107 and the open portion of the main auger mechanism 101 and by increasing the actual speed of the material movement so as the time of residence of the material inside the pyrolysis chamber 107 remains substantially the same.

The material temperature gradually rises while the material is moved by the main auger mechanism 101 along the pyrolysis chamber 107. This thermal profile allows the extraction of different gas/vapour mixture constituents from the material bulk to be time-spaced and geometry-separated. In the first, head portion of the pyrolysis chamber 107 (approximately 1/4 length thereof), where temperature is approximately 200°C, moisture and volatile hydrocarbons are removed from the material. Temperature limitation and its gradual rise in the first portion of the pyrolysis chamber 107 allows preventing explosive boiling up the material, which is able to cause undesirable effects like sharp pressure increase in the pyrolysis chamber 107, ingress of large amount of aerosol into the flues 102, and fractional content instability of the liquid fuel obtained during the plant operation.

In the second portion of the pyrolysis chamber 107 (approximately 1/2 length in the middle part thereof), organic substances are destroyed. In the third, last portion of the pyrolysis chamber 107 (approximately 1/4 length thereof), where temperature is approximately 500°C, the most heavy hydrocarbons and heat-resistant polymeric materials are destroyed, and the ash residue is formed and roasted. The cylinder shape and considerable volume of the pyrolysis chamber 107 allow the pyrolysis products circulating inside it, namely, heavy hydrocarbons produced in the third portion of the pyrolysis chamber 107 at the temperature of 500°C are transferred by convection and pressure gradient to the first portion of the pyrolysis chamber 107, where temperature is about 200°C, so they are deposited on the relatively cool material bulk and walls of the pyrolysis chamber 107, wherefrom they drain into the main auger mechanism 101 and return to the middle portion of the pyrolysis chamber 107. This arrangement facilitates homogenization of the fractional content of the liquid fuel obtained during the plant operation.

The gas/vapour mixture is removed from the pyrolysis chamber 107 via outlets 108 in the area of the first portion of the pyrolysis chamber 107 and discharged via the flues 102 made of a corrosion-resistant steel and disposed outside the pyrolysis chamber 107 along two opposite sides thereof. The flues 102 are positioned in the combustion chamber 106 on the route of exhaust products, where the temperature is in the range of approximately 150°C to approximately 450°C. Relatively high temperature of the flue walls prevents deposition of the pyrolysis products on the flue walls and facilitates homogenization of the gas/vapour mixture composition, as thermal destruction continues during movement of the gas/vapour mixture inside the flues 102. The flues 102 may be particularly shaped in order to increase the time of residence of the gas/vapour mixture in the area, where temperature is enough for continuing thermal destruction. Scheduled maintenance works performed by the applicant on the test plant prototypes did not detect any substantial depositions in the flues 102. This arrangement allows increasing the non-stop operation time of the plant (i.e. with no need of process shutdown and partial equipment disassembly for maintenance and minor repair works), as well as increasing the plant life cycle between overall recondition works.

The combustion chamber 106 is substantially rectangle-shaped in its lower part and substantially cylinder-shaped in its upper part. It is fire-proof lined and disposed below the pyrolysis chamber 107. The desired thermal profile of the pyrolysis chamber 107 is provided by a number of burners 103, 104, 105. The number and calorific power of the burners depend on the size and capacity of the plant. In particular, three combined gas/liquid fuel burners are used in one embodiment of the invention, wherein two of the burners are disposed in the middle part of the side walls of the combustion chamber 106 and the third burner is disposed in the far butt end of the combustion chamber 106, when seen along the direction of moving the material.

A number of blowers supply the combustion chamber 106 with atmospheric air. Some diesel fuel, boiler (furnace) fuel, waste crankcase oil, pyrolysis gas, natural gas, associated gas, etc. may be used as a fuel in the plant. Exhaust products heat the chute 113, the walls of the pyrolysis chamber 107 and the flues 102. The exhaust products are removed via an outlet 116 or 117 in the upper part of the combustion chamber 106. In an exemplary embodiment of the invention shown in Fig. 4, the exhaust products are removed from the combustion chamber 106 via the outlet 116 disposed in the area of the first portion of the pyrolysis chamber 107, which arrangement facilitates uniform heating the upper part of the pyrolysis chamber 107 and the flues 102. In an alternative embodiment of the invention, the exhaust products are removed from the combustion chamber 106 via the outlet 117 disposed in the area of the third portion of the pyrolysis chamber 107, which arrangement facilitates more intensive heating the upper part of the tail portion of the pyrolysis chamber 107 and far portions of the flues 102, when seen along the direction of moving the gas/vapour mixture. These configuration prearrangements allow readily customizing the plant for particular kinds of processed material. Doors 115 are provided in the side walls of the combustion chamber 106 for maintenance and minor repair works.

The corrosion-resistant steel used for manufacturing the corresponding plant members may be a steel of grades like 12H18N10T (*12X18H10T*)*,* 20H23N18 *(20X23H18),* 20H23N13 (*20X23H13*), etc. Some members may be made of a low-alloy steel like 09G2S (*09* 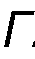 *2C*)*,* etc.

The plant is able to process organic material in various combinations. This feature assures high versatility and efficiency of the plant. Some technological parameters like pressure value in the pyrolysis chamber 107 and/or thermal conditions thereof may be changed promptly depending on the material composition e.g. by selecting a proper profile via operator interface of the automation control system of the plant.

In the first example of implementation of the invention, the processed material was rubber of worn tyres. Table 1 shows parameters of the liquid pyrolysis fuel obtained while a test run of the plant prototype using such a material.

**Table 1**

| **Parameter** | **Value** | **Units** | **Test Method** |
|---|---|---|---|
| Boiling Start Point | 41 | °C | GOST 2177 |
| Boiling End Point | 335 | °C | GOST 2177 |
| Fraction Composition: | | | |
| Rectified below 100°C | 13.0 | % vol. | GOST 2177 |
| Rectified below 120°C | 14.5 | | |
| Rectified below 140°C | 18.5 | | |
| Rectified below 160°C | 28.0 | | |
| Rectified below 180°C | 36.0 | | |
| Rectified below 200°C | 42.5 | | |
| Rectified below 220°C | 49.0 | | |
| Rectified below 240°C | 55.0 | | |
| Rectified below 260°C | 60.0 | | |
| Rectified below 280°C | 65.0 | | |
| Rectified below 300°C | 70.0 | | |
| Rectified below 320°C | 75.0 | | |
| Cetane Index | 32.6 | - | ASTM D 976 |
| Sulphur Content | 0.486 | % wt. | ASTM D 4294 |

In the second example of implementation of the invention, the processed material was a 1:1 mixture by weight of worn tyre rubber and waste crankcase oil. Table 2 shows parameters of the liquid pyrolysis fuel obtained while a test run of the plant prototype using such a material.

**Table 2**

| **Parameter** | **Value** | **Units** | **Test Method** |
|---|---|---|---|
| Boiling Start Point | 76 | °C | GOST 2177 |
| Boiling End Point | 381 | °C | GOST 2177 |
| Fraction Composition: | | | |
| Rectified below 100°C | 2.5 | % vol. | GOST 2177 |
| Rectified below 120°C | 5.0 | | |
| Rectified below 140°C | 9.5 | | |
| Rectified below 160°C | 16.0 | | |
| Rectified below 180°C | 23.0 | | |
| Rectified below 200°C | 29.0 | | |
| Rectified below 220°C | 34.0 | | |
| Rectified below 240°C | 39.0 | | |
| Rectified below 260°C | 46.0 | | |
| Rectified below 280°C | 52.0 | | |
| Rectified below 300°C | 57.0 | | |
| Rectified below 320°C | 59.0 | | |
| Rectified below 340°C | 63.0 | | |
| Rectified below 360°C | 73.0 | | |
| Rectified below 380°C | 81.0 | | |
| Cetane Index | 36.9 | - | GOST 27768 |
| Sulphur Content | 0.98 | % wt. | GOST R 51947 |

In the third example of implementation of the invention, the processed material was waste polyethylene. Table 3 shows parameters of the liquid pyrolysis fuel obtained while a test run of the plant prototype using such a material.

**Table 3**

| **Parameter** | **Value** | **Units** | **Test Method** |
|---|---|---|---|
| Boiling Start Point | 44 | °C | ASTM D 86 |
| Boiling End Point | 343 | °C | ASTM D 86 |
| Fraction Composition: | | | |
| Rectified below 80°C | 6.5 | % vol. | ASTM D 86 |
| Rectified below 100°C | 15.0 | | |
| Rectified below 120°C | 27.0 | | |
| Rectified below 140°C | 38.0 | | |
| Rectified below 160°C | 47.5 | | |
| Rectified below 180°C | 54.0 | | |
| Rectified below 200°C | 61.0 | | |
| Rectified below 220°C | 65.0 | | |
| Rectified below 240°C | 69.0 | | |
| Rectified below 260°C | 73.0 | | |
| Rectified below 280°C | 77.0 | | |
| Rectified below 300°C | 81.0 | | |
| Rectified below 320°C | 83.0 | | |
| Rectified below 340°C | 85.0 | | |
| Sulphur Content | 0.115 | % wt. | ASTM D 4294 |

In the fourth example of implementation of the invention, the processed material was waste crankcase oil. Table 4 shows parameters of the liquid pyrolysis fuel obtained while a test run of the plant prototype using such a material.

**Table 4**

| **Parameter** | **Value** | **Units** | **Test Method** |
|---|---|---|---|
| Boiling Start Point | 65 | °C | ASTM D 86 |
| Boiling End Point | 383 | °C | ASTM D 86 |
| Fraction Composition: | | | |
| Rectified below 100°C | 2.5 | % vol. | ASTM D 86 |
| Rectified below 120°C | 7.0 | | |
| Rectified below 140°C | 13.0 | | |
| Rectified below 160°C | 21.0 | | |
| Rectified below 180°C | 27.0 | | |
| Rectified below 200°C | 30.5 | | |
| Rectified below 220°C | 37.0 | | |
| Rectified below 240°C | 44.0 | | |
| Rectified below 260°C | 48.0 | | |
| Rectified below 280°C | 52.5 | | |
| Rectified below 300°C | 57.0 | | |
| Rectified below 320°C | 63.0 | | |
| Rectified below 340°C | 72.5 | | |
| Rectified below 360°C | 82.5 | | |
| Rectified below 380°C | 97.0 | | |
| Sulphur Content | 0.169 | % wt. | ASTM D 4294 |

In the fifth example of implementation of the invention, the processed material was wet shale cake (20% moisture) formed as a solid residue while centrifugal separation of shale sludge. Table 5 shows parameters of the liquid pyrolysis fuel obtained while a test run of the plant prototype using such a material.

**Table 5**

| **Parameter** | **Value** | **Units** | **Test Method** |
|---|---|---|---|
| Boiling Start Point | 86 | °C | GOST 2177 |
| Boiling End Point | 317 | °C | GOST 2177 |
| Fraction Composition: | | | |
| Rectified below 100°C | 4.0 | % vol. | GOST 2177 |
| Rectified below 120°C | 12.0 | | |
| Rectified below 140°C | 13.0 | | |
| Rectified below 160°C | 17.0 | | |
| Rectified below 180°C | 22.0 | | |
| Rectified below 200°C | 28.0 | | |
| Rectified below 220°C | 33.0 | | |
| Rectified below 240°C | 38.0 | | |
| Rectified below 260°C | 40.0 | | |
| Rectified below 280°C | 44.0 | | |
| Rectified below 300°C | 49.0 | | |
| Sulphur Content | 0.76 | % wt. | M-049/S98 |

The liquid pyrolysis fuel shown in Table 4 was further separated into three fractions, namely benzene fraction (boiling point below 180°C), kerosene fraction (boiling point 180°C to 240°C), and diesel fraction (boiling point 240°C to 360°C). Table 6 shows the main parameters of these fractions.

**Table 6**

| **Parameter** | **Value** | **Units** | **Test Method** |
|---|---|---|---|
| Benzene Fraction | | | |
| Density at 20°C | 0.7651 | kg/cm³ | ASTM D 4052 |
| Sulphur Content | 0.05 | % wt. | ASTM D 4294 |
| Kerosene Fraction | | | |
| Density at 20°C | 0.7864 | kg/cm³ | ASTM D 4052 |
| Kinematic viscosity at 20°C | 1.431 | cSt | ASTM D 445 |
| Flash Point | 32 | °C | GOST 6356 |
| Sulphur Content | 0.12 | % wt. | ASTM D 4294 |
| Diesel Fraction | | | |
| Density at 20°C | 0.8289 | kg/cm³ | ASTM D 4052 |
| Kinematic viscosity at 20°C | 2.861 | cSt | ASTM D 445 |
| Flash Point | 46 | °C | ASTM D 93 |
| Cetane Index | 48 | - | GOST 27768 |
| Sulphur Content | 0.192 | % wt. | ASTM D 4294 |

Data provided in Tables 1 to 6 shows that a qualified furnace fuel may be obtained from various materials. If the furnace fuel undergoes further treatment, then a qualified engine fuel may also be obtained from various materials. This proves the ability of the plant to process various combinations of organic materials and provide a liquid pyrolysis fuel having predetermined quality during operation of the plant.

The plant may be used for regeneration of non-organic filter materials and sorbent agents like kieselguhr used in brewery and food industry, by way of thermal destruction of organic sediments. In addition, the plant may be used for regeneration of some kinds of catalyst materials like pelletized metal catalysts or zeolite, by way of thermal destruction of organic sediments.

When necessary, the process may be adapted so as to assure a predetermined composition of the ash residue which, depending on the processed material, may be a dry fine mineral powder applicable in construction industry as a filler or a binding agent, a dry fine carbon powder applicable in different industries as a filler or a colouring agent, or a mixed carbon/mineral residue containing a predetermined amount of heavy hydrocarbons applicable in construction industry for building roadbed bottom layers, etc. In any way, the ash residue is a non-toxic or nearly non-toxic product that does not require additional treatment before utilization thereof.

The technical result attained by the invention is that the plant is able to process free-combined solid and liquid material, while the moisture content in the material may be non-normalized.

The technical result attained by the invention is improved safety of the plant operation.

The technical result attained by the invention is improved capacity of the plant.

The technical result attained by the invention is increased plant life cycle between overall recondition works.

The technical result attained by the invention is increased non-stop operation time of the plant.

The technical result attained by the invention is assuring a predetermined fractional content of the liquid fuel obtained during operation of the plant.

The technical result attained by the invention is assuring a predetermined chemical and fractional content of the ash residue.

The technical result attained by the invention is assuring movability of the plant and decreasing consumption of resources while mounting and dismounting the plant as well as while commissioning and decommissioning thereof.

The technical result attained by the invention is assuring independent supply of the plant with self-generated fuel and electric power.

Devices, means, methods and parts thereof mentioned herein relate to one or more particular embodiments when they are mentioned using a numeric designator, or to all embodiments (if applicable) when they are mentioned without using a numeric designator.

The sequence of actions in the method description provided herein is illustrative and this sequence may be changed in different embodiments of the invention, if operational integrity of the invention and the attained results are maintained.

Parts and features of the invention can be combined in various embodiments thereof, unless they conflict each other. The above embodiments of the invention are described solely for illustrative purpose and they are not intended to limit the scope of the invention, determined by the claims. All reasonable modifications, amendments, and equivalent replacements in the configuration and operation principles made within the substance of the invention are covered by the scope of the invention.

### LIST OF DESIGNATORS

1 - reactor
2 - feeding bin
3 - feeding auger mechanism
4 - feeding tank
5 - feeding pump
6 - fume cleaner
7 - smoke sucker
8 - chimney
9 - gas/vapour mixture filter
10 - heat exchanging device
11 - cooling device
12 - circulation pump
13 - knockout drum
14 - gas drier tower
15 - hydraulic trap
16 - accumulating tank
17 - residual water separator
18 - water tank
19 - fuel tank
20 - intermediate auger mechanism
21 - collecting bin
22 - discharging auger mechanism
23 - nitrogen source
24 - stand-alone power generating unit
25 - catalytic reactor
26 - loading means
27 - unloading means
28 - fume exhaust means
29 - gas/vapour mixture cooling means
30 - compressor
101 - main auger mechanism
102 - flue
103 - burner
104 - burner
105 - burner
106 - combustion chamber
107 - pyrolysis chamber
108 - outlet
109 - blower
110 - blower
111 - head portion
112 - tail portion
113- chute
114 - door
115 - door
116 - outlet
117 - outlet
201 - auger
202 - ferrule
203 - outer shell
204 - inner case
205 - passage
206 - end cap

## Claims

1. A reactor (1) for thermal destruction of an organic material comprising:
- an elongated pyrolysis chamber (107) disposed substantially horizontally;
- a main auger mechanism (101) disposed in a lower portion of the pyrolysis chamber (107) and inclined in relation to a longitudinal axis of the pyrolysis chamber (107), the main auger mechanism (101) comprising a group of at least two augers;
- a combustion chamber (106) substantially encompassing the pyrolysis chamber (107);
- at least one flue (102) for a gas/vapour mixture in communication with an outlet (108) for discharging the gas/vapour mixture from the pyrolysis chamber (107);
- at least one burner (103, 104, 105) disposed in the combustion chamber (106);
- at least one blower (109, 110) for supplying air into the combustion chamber (106).

2. The reactor of claim 1, wherein the pyrolysis chamber (107) is made of a corrosion-resistant steel.

3. The reactor of claim 1, wherein the pyrolysis chamber (107) is substantially cylinder-shaped.

4. The reactor of claim 1, wherein the lower portion of the pyrolysis chamber (107) comprises a chute (113), and a cross-section of the chute (113) corresponds to a shape of the group of augers.

5. The reactor of claim 1, wherein a thermal gradient is provided within the pyrolysis chamber (107), while temperature increases in a direction of material movement.

6. The reactor of claim 1, wherein a thermal gradient is provided within the pyrolysis chamber (107), while temperature increases in a direction of material movement from approximately 200°C to approximately 500°C.

7. The reactor of claim 1, wherein a differential pressure is provided in the pyrolysis chamber (107) in a range of approximately minus 10 mbar to approximately 50 mbar.

8. The reactor of claim 1, wherein connection joints of the pyrolysis chamber (107) are sealed in order to prevent ingress of atmospheric oxygen.

9. The reactor of claim 1, wherein the pyrolysis chamber (107) is supplied with nitrogen in order to prevent ingress of atmospheric oxygen.

10. The reactor of claim 1, wherein an angle between the main auger mechanism (101) and the longitudinal axis of the pyrolysis chamber (107) is in a range of 5° to 15° and the main auger mechanism (101) is ramped up in a direction of material movement.

11. The reactor of claim 1, wherein augers of the main auger mechanism (101) are made of a corrosion-resistant steel.

12. The reactor of claim 1, wherein augers of the main auger mechanism (101) are parallel to each other and overlapped by 10% to 30% of an auger diameter.

13. The reactor of claim 1, wherein adjacent augers of the main auger mechanism (101) rotate in opposite directions.

14. The reactor of claim 1, wherein augers of the main auger mechanism (101) are arranged in a horizontal row.

15. The reactor of claim 1, wherein augers of the main auger mechanism (101) are arranged in a number of horizontal rows.

16. The reactor of claim 1, wherein a lower portion of the combustion chamber (106) is substantially rectangular-shaped, while an upper portion of the combustion chamber (106) is substantially cylinder-shaped.

17. The reactor of claim 1, wherein an outlet (116) for discharging fumes from the combustion chamber (106) is disposed near a material loading side of the reactor (1).

18. The reactor of claim 1, wherein an outlet (117) for discharging fumes from the combustion chamber (106) is disposed near an ash residue unloading side of the reactor (1).

19. The reactor of claim 1, wherein each of the burners (103, 104, 105) is configured to burn a liquid and/or gaseous fuel.

20. The reactor of claim 1, wherein each of the burners (103, 104, 105) is disposed in the combustion chamber (106) so as to provide a thermal gradient within the pyrolysis chamber (107), while temperature increases in a direction of material movement.

21. The reactor of claim 1, wherein each of the burners (103, 104, 105) is disposed in the combustion chamber (106) so as to provide a thermal gradient within the pyrolysis chamber (107), while temperature increases in a direction of material movement from approximately 200°C to approximately 500°C.

22. The reactor of claim 1, wherein an outlet (108) for discharging the gas/vapour mixture is disposed near an initial portion of a material moving track in the pyrolysis chamber (107).

23. The reactor of claim 1, wherein each of the flues (102) is made of a corrosion-resistant steel.

24. The reactor of claim 1, wherein each of the flues (102) is disposed within the combustion chamber (106) outside and along the pyrolysis chamber (107).

25. The reactor of claim 1, wherein each of the flues (102) is disposed within an upper portion of the combustion chamber (106) outside and along the pyrolysis chamber (107).

26. The reactor of claim 1, wherein each of the flues (102) is disposed within the combustion chamber (106) on an exhaust products moving route, where temperature of exhaust products is in a range of approximately 150°C to approximately 450°C.

27. A plant for pyrolytic processing a material containing organic substances comprising:
- a reactor (1) **characterized in** any of claims 1 to 26;
- loading means (26) connected to a main auger mechanism (101) of the reactor (1);
- unloading means (27) connected to a main auger mechanism (101) of the reactor (1);
- fume exhaust means (28) connected to a combustion chamber (106) of the reactor (1);
- a pressurized nitrogen source (23) connected to a pyrolysis chamber (107) of the reactor (1);
- a gas/vapour mixture filter (9) connected to at least one gas/vapour mixture flue (102) of the reactor (1);
- gas/vapour mixture cooling means (29) connected to the gas/vapour mixture filter (9);
- a gas/liquid separator (13) connected to the gas/vapour mixture cooling means (29);
- a gas drier tower (14) connected to the gas/liquid separator (13);
- a hydraulic trap (15) connected to the gas drier tower (14);
- a residual water separator (17) connected to the gas drier tower (14);
- a fuel tank (19) for a liquid pyrolysis fuel, connected to the residual water separator (17).

28. A The plant of claim 27, wherein the fuel tank (19) is connected to the reactor (1).

29. The plant of claim 27, wherein the hydraulic trap (15) is connected to the reactor (1).

30. The plant of claim 27, wherein the hydraulic trap (15) is a scrubber configured to function as a hydraulic trap.

31. The plant of claim 27, further comprising an intermediate accumulating tank (16) for the liquid pyrolysis fuel, connected between the gas/liquid separator (13), the gas drier tower (14), and the residual water separator (17).

32. The plant of claim 27, further comprising a catalytic reactor (25), connected between the reactor (1) and the gas/vapour mixture filter (9).

33. The plant of claim 27, further comprising a stand-alone power generating unit (24) connected to the fuel tank (19) and/or to the hydraulic trap (15).

34. The plant of claim 27, wherein the loading means (26) comprise a level gage having a predetermined cut-off setting so as to assure continuous feeding the material into the reactor (1).

35. The plant of claim 27, wherein the material is liquid and the loading means (26) comprise a heater for reducing viscosity of the material.

36. The plant of claim 27, wherein the unloading means (27) comprise a cooled auger (201).

37. The plant of claim 27, wherein the unloading means (27) comprise a liquid-cooled or gas-cooled auger (201).

38. The plant of claim 27, wherein the unloading means (27) comprise a replaceable ferrule (202) disposed between an auger (201) and an inner case (204) of a discharging auger mechanism (22).

39. The plant of claim 27, wherein the nitrogen source (23) is connected to the unloading means (27).

40. The plant of claim 27, wherein nitrogen supplied from the nitrogen source (23) to the unloading means (27) is heated.

41. The plant of claim 27 based on a modular configuration approach.

42. A method of pyrolytic processing a material containing organic substances, the method comprising the steps of:
- loading the material into a reactor (1) **characterized in** any of claims 1 to 26 using loading means (26);
- providing movement of the material inside a pyrolysis chamber (107) of the reactor (1) by a main auger mechanism (101);
- providing a thermal gradient within the pyrolysis chamber (107), while temperature increases in a direction of material movement;
- providing circulation of pyrolysis products inside the pyrolysis chamber (107) of the reactor (1);
- discharging a gas/vapour mixture from the pyrolysis chamber (107) of the reactor (1);
- processing the gas/vapour mixture by a gas/vapour mixture filter (9), gas/vapour mixture cooling means (29), a gas/liquid separator (13), a gas drier tower (14), and a residual water separator (17) so as to obtain a liquid or gaseous pyrolysis fuel;
- supplying a combustion chamber (106) of the reactor (1) with at least part of the obtained liquid and/or gaseous pyrolysis fuel;
- unloading an ash residue from the reactor (1) by unloading means (27).

43. The method of claim 42, wherein the gaseous pyrolysis fuel is additionally processed by a scrubber (15).

44. The method of claim 42, wherein the reactor (1) is continuously fed with the material.

45. The method of claim 42, wherein the material is liquid and is heated so as to reduce its viscosity.

46. The method of claim 42, wherein the movement of the material assures transferring heavy hydrocarbons by convection and a pressure gradient from a portion of the pyrolysis chamber (107), where temperature is higher to a portion of the pyrolysis chamber (107), where temperature is lower; condensing the heavy hydrocarbons in a portion of the pyrolysis chamber (107), where temperature is lower; and then returning the heavy hydrocarbons to a portion of the pyrolysis chamber (107), where temperature is higher, using the main auger mechanism (101).

47. The method of claim 42, wherein the thermal gradient within the pyrolysis chamber (107) is provided in a direction of material movement from approximately 200°C to approximately 500°C.

48. The method of claim 42, wherein a differential pressure in the pyrolysis chamber (107) is provided in a range of approximately minus 10 mbar to approximately 50 mbar.

49. The method of claim 42, wherein the reactor (1) comprises a cooled auger (201) of a discharging auger mechanism (22).

50. The method of claim 42, wherein the unloading means (27) are supplied with nitrogen.

51. The method of claim 42, wherein the unloading means (27) are supplied with heated nitrogen.

52. The method of claim 42, wherein the liquid and/or gaseous pyrolysis fuel is used for producing electric power by a stand-alone power generating unit (24).

53. Use of a reactor (1) **characterized in** any of claims 1 to 26 for regeneration of non-organic filter materials, sorbent agents or catalyst materials.

54. Use of a reactor (1) **characterized in** any of claims 1 to 26 for processing a substantially non-organic material.
